# EUROPEAN PATENT SPECIFICATION

(11) **EP 0 597 678 B1**
(45) Date of publication and mention of the grant of the patent: **28.01.1998**
(21) Application number: 93308952.6
(22) Date of filing: 09.11.1993
(51) Int. Cl.: H02K 7/08

(54) **Integral bearing type electric motor**
Elektrischer Motor des Typs mit integriertem Lager
Moteur électrique du type à palier intégré

(30) Priority: 09.11.1992 JP 323645/92
(43) Date of publication of application: 18.05.1994
(60) Divisional application: 97201208.2
(73) Proprietor: MINEBEA KABUSHIKI-KAISHA, Kitasaku-gun, Nagano-ken (JP)
(72) Inventor: Obara, Rikuro, c/o Minebea K.K., Kitasaku-gun, Nagano-ken (JP)
(74) Representative: Warren, Stanley Francis

(56) References cited:
- EP-A- 0 402 240
- EP-A- 0 524 673
- EP-A- 0 592 214
- WO-A-93/06600
- DE-A- 3 540 363
- DE-B- 2 404 241
- FR-A- 2 565 017
- US-A- 5 045 738
- US-A- 5 128 571
- PATENT ABSTRACTS OF JAPAN vol. 013, no. 070 (P-829) 17 February 1989 & JP-A-63 255 869 (MATSUSHITA ELECTRIC IND CO LTD) 24 October 1988
- PATENT ABSTRACTS OF JAPAN vol. 012, no. 199 (P-714) 9 June 1988 & JP-A-63 000 859 (HITACHI LTD) 5 January 1988

## Description

This invention relates to electric motors mainly applied to OA apparatus.

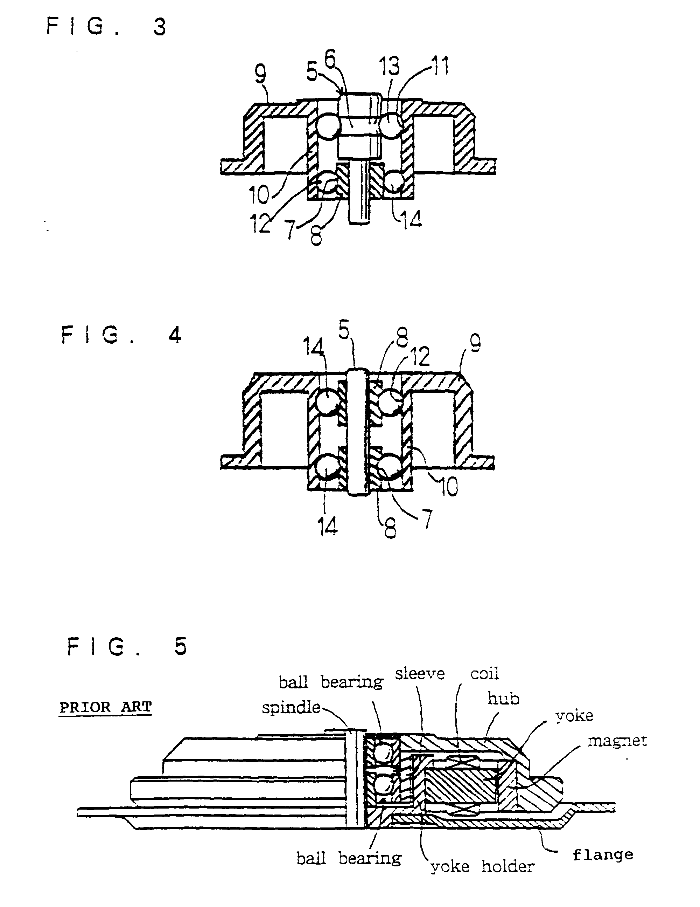

Fig. 5 shows a prior art electric motor, for instance a spindle motor. The motor comprises a spindle, a hub as rotor, a flange as base, and a yoke holder. The spindle is supported in a ball bearing, which comprises an inner and an outer ring provided in a bearing sleeve. These components are provided as independent parts, and such components as the hub, flange, yoke holder, etc. are separate parts from the ball bearing.

Since the prior art motor comprises the hub, flange and yoke holder as separate parts from the ball bearing, it has a large number of components. Besides, in manufacture a step of assembling the components on the ball bearing is necessary. The manufacture thus involves a large number of steps and leads to a high cost.

Further, since in the prior art structure the individual components are independent parts, it is not easy to provide accurate raceway run-out with side when assembling the individual components. Therefore, improvement of the raceway run-out with side can not be substantiallv expected.

EP-A-0 592 214 was filed on 07/10/93 designating the contracting states Germany, France, Britain, Italy and The Netherlands. It claimed priority from two Japanese applications, one filed before the priority of this application (JP 293858/92, 7/10/92) and one filed on the same day as the priority of this application (JP 323646/92, 9/11/92). EP-A-O 592 214 thus forms part of the prior art in the meaning of Article 54(3) EPC in so far as its subject-matter was disclosed in its earlier priority document.

DE-A-2404241 discloses an integral bearing electric motor in which the stator yoke holder is moulded together with the sleeve, and US-A-5045738 discloses an integral bearing electric motor in which the hub as the rotor is moulded together with the sleeve.

US-A-5128571 discloses an integral bearing electric motor in which the stator yoke holder is moulded with the sleeve. Balls are provided between the spindle and the sleeve, or inner rings surrounding the spindle may be provided in which case balls are located between the inner rings and the sleeve.

DE-A-3540363 discloses an integral bearing electric motor including a stepped spindle having a large and a small diameter portion. The small diameter portion has an inner ring surrounding it and balls are provided between the inner ring and the sleeve surrounding the spindle and between the large diameter portion and the sleeve.

Patent Abstract of Japan JP-A-63255869 discloses an integral bearing electric motor in which a flange is moulded with the sleeve of the bearing body.

An object of the invention is to provide an electric motor, particularly, a spindle motor, which comprises a reduced number of components and can reduce the steps of assembling to permit reduction of the cost of manufacture to be expected, as well as permitting improvement of the race-way run-out with side.

Accordingly, the present invention consists in an electric motor comprising a stator, a rotor, and a bearing assembly including a spindle and a plurality of balls, said rotor serving both as a sleeve, surrounding said spindle and also forming part of said bearing assembly, and as a hub, said bearing assembly further comprising an inner ring fitted on said spindle, at least some of said balls being provided between said inner ring and said sleeve, said hub being integrally formed with said sleeve and comprising a radial portion projecting radially outwardly from an outer periphery of one end of said sleeve and a cylindrical portion extending from an outer edge of said radial portion and surrounding said sleeve, said stator comprising a cylindrical yoke holder, which surrounds said sleeve and is surrounded by said cylindrical portion of said hub, and a stator yoke with a coil, the rotor including a magnet mounted on the hub or the sleeve so as to face said stator yoke.

Preferred embodiments of electric motor using composite bearings according to the invention will now be described by way of example with reference to the accompanying drawings, in which:
FIG. 1 is a sectional view showing a first embodiment of the invention;
FIG. 2 is a sectional view showing a second embodiment of the invention;
FIG. 3 is a sectional view showing a spindle and hub arrangement for use in a motor according to the invention;
FIG. 4 is a sectional view showing a spindle and hub arrangement for use in a motor according to the invention;
FIG. 5 is a sectional view showing a prior art spindle motor.

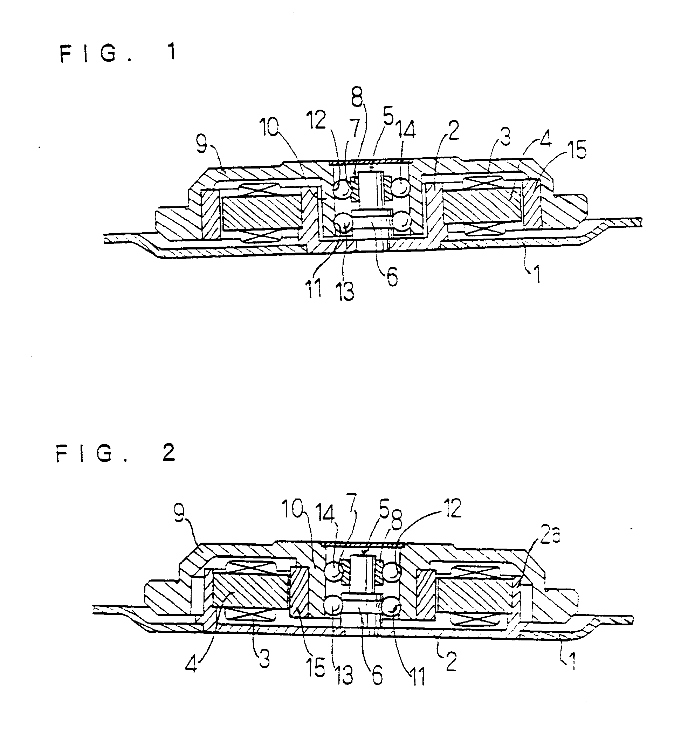

Fig. 1 shows an outer rotor type spindle motor according to the invention.

In the embodiment shown in Fig. 1, a flange 1 as base has its central portion provided with a cylindrical yoke holder, and a stator yoke 4 with a coil 3 is provided around the yoke holder. A spindle 5 is secured at its lower end to the center of the flange, more specifically the center of the bottom of a yoke holder 2. The spindle is a two-step spindle with a small diameter upper portion.

The outer periphery of the lower large diameter portion of the spindle is formed with a race 6, and an inner ring 8 with a race 7 is fitted on the small diameter portion of the spindle.

According to the invention, a hub 9 as rotor has a central integral sleeve 10 for a bearing body. The inner periphery of the sleeve 10 has juxtaposed races 11 and 12 respectively corresponding to the large diameter portion race of the spindle and the race of the inner ring. Balls 13 and 14 are provided between mating ones of the races. The sleeve 10, balls 13 and 14, inner ring 8 and race 6 of the large diameter portion of the spindle, form the ball bearing body, which supports the hub for rotation about the spindle. A magnet 15 for forming field magnetic flux is provided on the inner periphery of the hub such that it faces the yoke.

Fig. 2 shows an inner rotor type spindle motor according to the invention.

In the embodiment shown in Fig. 2, a two-step spindle 5 is erected from the bottom center of a stator yoke holder 2 having an outer flange 1. A stator yoke 4 is mounted in the inner periphery of a cylindrical rib 2a of the stator yoke holder.

In this embodiment, the sleeve 10 for the ball bearing body is formed such that it is integral with the center of the hub 10. The structure of the ball bearing body is the same as in the embodiment of Fig. 1, but a permanent magnet is provided on the outer periphery of the sleeve 10.

In each embodiment, the inner surface (top surface) of the flange is provided with a printed circuit board for motor driving in correspondence to the coil 3.

Beside the above embodiments, there are many variations in which the hub is made integral with the sleeve of the ball bearing body. Some of such variations are given below.

Figs. 3 and 4 show alternative spindle and hub arrangements for use in electric motors according to the invention. Like numerals are used to designated like parts. Each hub 9 and sleeve 10 of the ball bearing body are moulded together to form a one-piece moulding.

As has been described in the foregoing, according to the invention the hub rotor is moulded such that it is integral with the sleeve of the bearing body. Thus, assembling at the time of the manufacture can be readily made, efficient assembling can be obtained by using machines, and the cost of manufacture can be reduced, which are very beneficial in the industrial production.

Further, the hub may be preliminarily moulded together with the sleeve of the ball bearing body. Thus, it is possible to provide a motor, which is free from raceway and has high raceway run-out with side, which does not require any centring of the spindle with respect to the component noted above during its manufacture.

Further, the composite bearing has an advantage in manufacture that pre-loading can be readily effected by urging the inner rings to each other in their axial direction.

## Claims

1. An electric motor comprising a stator (2,3,4), a rotor (9,10), and a bearing assembly (5,8,10) including a spindle (5) and a plurality of balls (13,14), said rotor (9,10) serving both as a sleeve (10), surrounding said spindle (5) and also forming part of said bearing assembly (5,8,10), and as a hub (9), said bearing assembly (5,8,10) further comprising an inner ring (8) fitted on said spindle (5), at least some of said balls (13,14) being provided between said inner ring (8) and said sleeve (10), said hub (9) being integrally formed with said sleeve (10) and comprising a radial portion projecting radially outwardly from an outer periphery of one end of said sleeve (10) and a cylindrical portion extending from an outer edge of said radial portion and surrounding said sleeve (10), said stator (2,3,4) comprising a cylindrical yoke holder (2,2a), which surrounds said sleeve (10) and is surrounded by said cylindrical portion of said hub (9), and a stator yoke (4) with a coil (3), the rotor (9,10) including a magnet (15) mounted on the hub (9) or the sleeve (10) so as to face said stator yoke (4).

2. An electric motor as claimed in claim 1, wherein some of said balls (13,14) are also provided between said spindle (5) and said sleeve (10).

3. An electric motor as claimed in claim 2, wherein said spindle (5) comprises a stepped spindle having a large and a small diameter portion, said large diameter portion being formed with an outer ball race (6) and said sleeve (10) being formed with an inner ball race (11) with a first row of balls (13) provided between said races (6,11) and said small diameter portion having said inner ring (8) fitted thereon, said inner ring (8) being formed with an outer ball race (7) and said sleeve (10) being formed with another inner ball race (12) with a second row of balls (14) provided between said races (7,12).

4. An electric motor as claimed in any preceding claim, wherein said magnet (15) is mounted on an inner periphery of said hub (9).

5. An electric motor as claimed in any one of claims 1 to 3, wherein said magnet (15) is mounted on an outer periphery of said sleeve (10).

## Patentansprüche

1. Elektrischer Motor, der einen Ständer (2,3,4) umfasst, einen Läufer (9,10), und eine Lageranordnung (5,8,10), die ein Spindel (5) und eine Vielzahl von Kugeln (13,14) einschliesst, wobei der Läufer (9,10) als Hülse (10), die die Spindel (5) umgibt, und auch ein Teil der Lageranordnung (5,8,10) bildet, und als eine Nabe (9) dient, wobei die Lageranordnung (5,8,10) weiterhin einen inneren Ring (8) umfasst, der auf der Spindel (5) angebracht ist, wobei wenigstens einige der Kugeln (13,14) zwischen dem inneren Ring (8) und der Hülse (10) vorgesehen sind, wobei die Nabe (9) integral mit der Hülse (10) gebildet ist und ein radiales Teil umfasst, das sich von einer äusseren Peripherie von einem Ende der Hülse (10) radial nach aussen erstreckt, und ein zylindrisches Teil, das sich von einer äusseren Kante des radialen Teils erstreckt und die Hülse (10) umgibt, wobei der Ständer (2,3,4) einen zylindrischen Jochhalter (2,2a) umfasst, der die Hülse (10) umgibt und von dem zylindrischen Teil der Nabe (9) umgeben ist, und ein Ständerjoch (4) mit einer Spule (3), wobei der Läufer (9,10) einen Magneten (15) einschliesst, der auf der Nabe (9) oder der Hülse (10) angebracht ist, um dem Ständerjoch (4) gegenüberzuliegen.

2. Elektrischer Motor nach Anspruch 1, in dem einige der Kugeln (13,14) auch zwischen der Spindel (5) und der Hülse (10) vorgesehen sind.

3. Elektrischer Motor nach Anspruch 2, in dem die Spindel (5) eine abgestufte Spindel mit einem grossen und einem kleinen Durchmesserteil hat, wobei das grosse Durchmesserteil mit einem äusseren Kugellager (6) gebildet ist, und die Hülse (10) mit einem inneren Kugellager (11) gebildet ist, wobei eine erste Reihe von Kugeln (13) zwischen den Lagern (6,11) vorgesehen ist, und das kleine Durchmesserteil den inneren Ring (8) darauf angebracht hat, wobei der innere Ring (8) mit einem äusseren Kugellager (7) gebildet ist, und die Hülse (10) mit einem anderen inneren Kugellager (12) gebildet ist, wobei eine zweiten Reihe von Kugeln (14) zwischen den Lagern (7,12) vorgesehen ist.

4. Elektrischer Motor nach einem der vorhergehenden Ansprüche, in dem der Magnet (15) auf einer inneren Peripherie der Nabe (9) angebracht ist.

5. Elektrischer Motor nach einem der Ansprüche 1 bis 3, in dem der Magnet (15) auf einer äusseren Peripherie der Hülse (10) angebracht ist.

## Revendications

1. Moteur électrique comportant un stator (2,3,4), un rotor (9,10), et un ensemble de palier (5,8,10) y compris un axe (5) et une pluralité de billes (13,14), ledit rotor (9,10) servant à la fois comme manchon (10), qui entoure ledit axe (5) ainsi que formant un élément dudit ensemble de palier (5,8,10) et comme moyeu (9), ledit ensemble de palier (5,8,10) comportant en outre une bague intérieure (8) montée sur ledit axe (5), au minimum certaines desdites billes (13,14) .tant prévues entre ladite bague intérieure (8) et ledit manchon (10), ledit moyeu (9) étant formé solidaire avec ledit manchon (10) et comportant une portion radiale en saillie radiale extérieure d'un pourtour extérieur d'une extrémité dudit manchon (10) et une portion cylindrique s'allongeant depuis un bord extérieur de la dite portion radiale et entourant ledit manchon (10), ledit stator (2,3,4) comportant un porte étrier cylindrique (2,2a), qui entoure ledit manchon (10) et à son tour est entouré par ladite portion cylindrique dudit moyeu (9), et une culasse de stator (4) avec une bobine (3), le rotor (9,10) y compris un aimant (15) monté sur le moyeu (9) ou le manchon (10) de telle façon (3) à se présenter face à la culasse du stator (4).

2. Moteur électrique tel que revendiqué à la revendication 1, dont certaines desdites billes (13,14) sont également prévues entre ledit axe (5) et ledit manchon (10).

3. Moteur électrique tel que revendiqué à la revendication 2, dont ledit axe (5) est un axe (5) à gradins ayant une portion de diamètre supérieur et de diamètre inférieur, ladite portion de diamètre supérieur consistant d'une cage à billes extérieure (6) et ledit manchon (10) consistant d'une cage à billes intérieure (11) avec une première rangée de billes (13) et ladite portion de diamètre inférieur ayant ladite bague (8) installée sur place, ladite bague intérieure (8) consistant d'une cage à billes extérieure (7) et ledit manchon (10) ayant une autre cage billes intérieure (12) avec une deuxième rangée de billes (14) prévue entre lesdites cages (7,12).

4. Moteur électrique tel que revendiqué à l'une ou l'autre des revendications précédentes, dont ledit aimant (15) est monté sur un pourtour intérieur dudit moyeu (9).

5. Moteur électrique tel que revendiqué à l'une ou l'autre des revendications précédentes 1 à 3, dont ledit aimant (15) est monté sur un pourtour extérieur dudit manchon (10).
